# EUROPEAN PATENT APPLICATION

(11) **EP 4 811 706 A1**
(43) Date of publication of application: **23.09.2026**
(21) Application number: 24892866.5
(22) Date of filing: 30.07.2024
(51) Int. Cl.: H04L 5/00

(54) **REFERENCE SIGNAL CONFIGURATION METHOD, COMMUNICATION APPARATUS AND STORAGE MEDIUM**

(30) Priority: 22.11.2023 CN 202311572857
(71) Applicant: ZTE CORPORATION, Shenzhen, Guangdong 518057 (CN)
(72) Inventor: LU, Zhaohua, Shenzhen, Guangdong 518057 (CN); LIU, Kun, Shenzhen, Guangdong 518057 (CN); XIAO, Huahua, Shenzhen, Guangdong 518057 (CN); LIU, Wenfeng, Shenzhen, Guangdong 518057 (CN); LI, Yong, Shenzhen, Guangdong 518057 (CN); LI, Lun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/108362
(87) International publication number: WO 2025/107702

(57) **Abstract**

The embodiments of the present disclosure relate to the technical field of communications, and provided are a reference signal configuration method, a communication apparatus and a storage medium. The communication method comprises: generating reference signal configuration information, the reference signal configuration information comprising respective description information of M ports or respective description information of M port groups, M being a positive integer, and sending the reference signal configuration information.

## Description

### CROSS-REFERENCE TO RELATED APPLICATION(S)

This application claims priority to Chinese Patent Application No. 202311572857.6, filed with the China National Intellectual Property Administration on November 22, 2023, entitled "REFERENCE SIGNAL CONFIGURATION METHOD, COMMUNICATION APPARATUS AND STORAGE MEDIUM", which is incorporated herein by reference in its entirety.

### TECHNICAL FIELD

The present disclosure relates to the field of communication technologies, and in particular, to a reference signal configuration method, a communication device and a storage medium.

### BACKGROUND

Multi-antenna technologies have been widely used in various wireless communication technologies. The multi-antenna technologies include multiple-input multiple-output (MIMO), joint transmission (JT) by multiple transmission nodes, and highfrequency beamforming. In order to fully utilize the performance of multiple antennas, it is crucial for communication nodes to acquire accurate channel information.

Currently, in the field of multi-antenna technologies, a demodulation reference signal (DMRS) serving as a pilot may be inserted during data transmission in each transmission time interval, so that the communication terminal performs channel estimation based on the received DMRS that has traversed the wireless fading channel and demodulates the transmitted data. However, in current communication systems, demodulation reference signals corresponding to different antenna ports may have the same configuration, resulting in poor flexibility and affecting the spectral efficiency of the communication system.

### SUMMARY

In a first aspect, a reference signal configuration method is provided in the present disclosure. The method includes: generating reference signal configuration information, the reference signal configuration information including description information for each of M ports or description information for each of M port groups, and M being a positive integer; and sending the reference signal configuration information.

In a second aspect, another reference signal configuration method is provided in the present disclosure. The method includes: receiving reference signal configuration information. The reference signal configuration information includes description information for each of M ports or description information for each of M port groups, and M is a positive integer.

In a third aspect, a communication device is provided in the present disclosure. The communication device includes: a processing module configured to generate reference signal configuration information, where the reference signal configuration information includes description information for each of M ports or description information for each of M port groups, and M is a positive integer; and a sending module configured to send the reference signal configuration information.

In a fourth aspect, another communication device is provided in the present disclosure. The communication device includes: a receiving module configured to receive reference signal configuration information. The reference signal configuration information includes description information for each of M ports or description information for each of M port groups, and M is a positive integer.

In a fifth aspect, a communication device is further provided in the present disclosure. The communication device includes: a memory and a processor. The memory is coupled to the processor. The memory is configured to store instructions executable by the processor. The processor, upon executing the instructions, performs any method provided in the first aspect or the second aspect.

In a sixth aspect, a computer program product including computer instructions is provided in the present disclosure. The computer instructions, upon being executed on a computer, enable the computer to perform any method provided in the first aspect or the second aspect.

### BRIEF DESCRIPTION OF THE DRAWINGS

FIG. 1 is a schematic diagram showing an architecture of a communication system provided in embodiments of the present disclosure;
FIG. 2 is a flow chart of a reference signal configuration method provided in embodiments of the present disclosure;
FIG. 3 is a schematic diagram of a port provided in embodiments of the present disclosure;
FIG. 4 is a schematic diagram of a port group provided in embodiments of the present disclosure;
FIG. 5 is a schematic diagram of an occupied resource provided in embodiments of the present disclosure;
FIG. 6 is a schematic diagram of another occupied resource provided in embodiments of the present disclosure;
FIG. 7 is a schematic diagram of yet another occupied resource provided in embodiments of the present disclosure;
FIG. 8 is a schematic diagram of sequence information provided in embodiments of the present disclosure;
FIG. 9 is a schematic diagram of another sequence information provided in embodiments of the present disclosure;
FIG. 10 is a schematic diagram of a transmission configuration provided in embodiments of the present disclosure;
FIG. 11 is a schematic diagram of another transmission configuration provided in embodiments of the present disclosure;
FIG. 12 is a schematic diagram of a waveform configuration provided in embodiments of the present disclosure;
FIG. 13 is a schematic diagram of another waveform configuration provided in embodiments of the present disclosure;
FIG. 14 is a schematic diagram of a processing mode provided in embodiments of the present disclosure;
FIG. 15 is a schematic diagram of another processing mode provided in embodiments of the present disclosure;
FIG. 16 is a schematic diagram of a scope provided in embodiments of the present disclosure;
FIG. 17 is a schematic diagram of another scope provided in embodiments of the present disclosure;
FIG. 18 is a schematic diagram of yet another scope provided in embodiments of the present disclosure;
FIG. 19 is a schematic diagram of yet another scope provided in embodiments of the present disclosure;
FIG. 20 is a flow chart of another reference signal configuration method provided in embodiments of the present disclosure;
FIG. 21 is a schematic diagram showing components of a communication device provided in embodiments of the present disclosure;
FIG. 22 is a schematic diagram showing components of another communication device provided in embodiments of the present disclosure; and
FIG. 23 is a schematic diagram showing a structure of a communication device provided in embodiments of the present disclosure.

### DETAILED DESCRIPTION

The technical solutions in the embodiments of the present disclosure are clearly and completely described below with reference to the accompanying drawings in the embodiments of the present disclosure. However, the described embodiments are merely some, but not all, embodiments of the present disclosure. All other embodiments obtained based on the embodiments of the present disclosure by those of ordinary skill in the art without paying any creative effort will fall within the protection scope of the present disclosure.

In the description of the present disclosure, unless otherwise specified, the symbol "/" means "or", for example, "A/B" may mean A or B. Herein, "and/or" is merely an associated relationship for describing associated objects, which means that there may be three relationships, for example, "A and/or B" may mean: only A, A and B at the same time, and only B. In addition, the term such as "at least one" means one or more, and the term such as "a/the plurality of" means two or more. Terms such as "first" and "second" do not limit the number and execution order, and do not necessarily indicate that the objects defined by the terms are different.

It will be noted that, in the present disclosure, the term such as "exemplary" or "for example" is used to represent examples, illustrations, or explanations. Any embodiment or design scheme described with "exemplary" or "for example" in the present disclosure is not necessarily to be construed as preferred or advantageous over other embodiments or design schemes. Rather, the use of the term such as "exemplary" or "for example" is intended to present related concepts in a specific manner.

In mobile communication systems, an antenna port is a logical transmission channel defined by a reference signal. For a receiving end, an antenna port is an independent antenna channel. A transmitting end sends a demodulation reference signal on the antenna port, and the receiving end uses the demodulation reference signal to perform downlink or uplink data demodulation during transmission over a control channel or data channel. However, in general, different antenna ports use essentially the same demodulation reference signal configuration. For example, they use the same number of time-domain symbols, the same number of frequency-domain subcarriers, and a channel processing mode based on the demodulation reference signal measurement is transparent to the transmitting end. This results in poor flexibility, high overhead, and an inability to perform adaptive and flexible adjustments according to an actual radio channel environment, thereby affecting the spectral efficiency of the system.

Based on this, a reference signal configuration method is provided in the present disclosure. The method includes: generating reference signal configuration information, the reference signal configuration information including description information for each of M ports or description information for each of M port groups, and M being a positive integer; and sending the reference signal configuration information. In this way, each port or each port group has its own reference information configuration, so that an adaptive adjustment may be performed based on an actual radio channel environment, thereby meeting transmission requirements of different service scenarios.

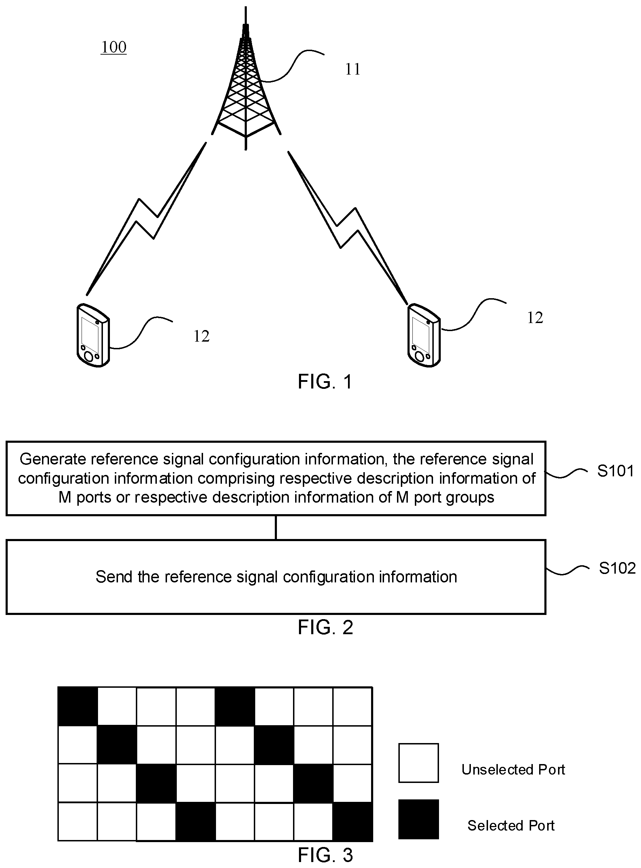

The method provided in the embodiments of the present disclosure may be applied to various communication systems. For example, the communication system may be a long term evolution (LTE) system, a 5th generation (5G) communication system, a Wi-Fi system, a 3rd generation partnership project (3GPP)-related communication system, a future evolved communication system (e.g., a 6th generation (6G) communication system), or a system integrating multiple systems, which is not limited thereto. The method provided in the embodiments of the present disclosure is described below by considering a communication system 100 shown in FIG. 1 as an example. FIG. 1 is merely a schematic diagram and does not constitute a limitation on the applicable scenarios of the technical solutions provided in the present disclosure.

FIG. 1 is a schematic diagram showing an architecture of a communication system provided in the embodiments of the present disclosure. As shown in FIG. 1, the communication system 100 may include one or more network devices 11 and one or more terminal devices 12. The terminal device 12 may be communicatively connected with one or more network devices 11.

In some embodiments, the network device 11 may be used to implement functions such as resource scheduling, radio resource management, and radio access control of terminal devices. For example, the network device 11 may include an evolution node B (eNB), a next generation node B (gNB), a transmission receive point (TRP), a transmission point (TP), and any other access node. The base station may be further classified, according to a size of a service coverage area provided by the base station, into a macro base station for providing a macro cell, a pico base station for providing a pico cell, and a femto base station for providing a femto cell. With the continuous evolution of wireless communication technologies, future base stations may also adopt other names.

The terminal device 12 may also be referred to as a terminal, user equipment (UE), a mobile station, or a mobile terminal, etc. For example, the terminal device 12 may be a mobile phone, a tablet computer, a computer with a wireless transceiving function, a virtual reality terminal, an augmented reality terminal, a wireless terminal in industrial control, a wireless terminal in self driving, a wireless terminal in remote surgery, a wireless terminal in transportation safety, a wireless terminal in a smart city, or a wireless terminal in a smart home. The embodiments of the present disclosure do not impose any limitation on a specific device form adopted by the terminal.

In some embodiments, in a communication process, if the network device sends data to the terminal device and the terminal device receives the data sent by the network device, the network device may be referred to as a transmitting end, correspondingly, the terminal device may be referred to as a receiving end. Alternatively, if the terminal device sends data to the network device, the network device may be referred to as the receiving end, and correspondingly, the terminal device may be referred to as the transmitting end.

It will be noted that, FIG. 1 is only an exemplary architecture diagram, and the number of devices or nodes and names of the various devices included in FIG. 1 are not limited, and in addition to the functional nodes shown in FIG. 1, the communication system may further include other nodes or devices, such as a core network device.

The system architectures and the service scenarios described in the embodiments of the present disclosure are intended to more clearly explain the technical solutions in the embodiments of the present disclosure, and do not constitute a limitation on the technical solutions provided in the embodiments of the present disclosure. Those of ordinary skill in the art will know that, with the evolution of network architectures and the emergence of new service scenarios, the technical solutions provided in the embodiments of the present disclosure are also applicable to similar technical problems.

The embodiments provided in the present disclosure are specially introduced below in conjunction with the drawings provided herein.

As shown in FIG. 2, a reference signal configuration method is provided in the embodiments of the present disclosure. The method is applied to a transmitting end device and includes the following steps.

In S101, reference signal configuration information is generated, the reference signal configuration information includes description information for each of M ports or description information for each of M port groups.

Herein, M is a positive integer. For example, during communication, a transmitting end device, such as the network device 11 shown in FIG. 1, may generate reference signal configuration information and send the reference signal configuration information to a receiving end device, such as the terminal device 12 shown in FIG. 1.

Moreover, the reference signal provided in the present disclosure includes a plurality of types of reference signals, such as a channel state information reference signal (CSI-RS), a demodulation reference signal, a phase tracking reference signal (PTRS), and a sounding reference signal (SRS).

In some embodiments, the reference signal configuration information further includes information that the number of ports is N, and N is a positive integer greater than or equal to M.

In an example, the transmitting end device may determine the M ports from the N ports. The ports are the antenna ports.

For example, a value of N may be 32, and a value of M may be 8. As shown in FIG. 3, the transmitting end device may select 8 ports from 32 ports, and then generate description information corresponding to each of the 8 ports, that is, generate the reference signal configuration information described above.

In addition, the remaining 24 ports among the 32 ports that are not selected (i.e., the remaining 24 ports, among the 32 ports, whose description information is not sent) may have corresponding default values. The reference signal configuration information may further include the default values corresponding to the 24 ports. Alternatively, the information that the 24 ports are not selected or that description information for the 24 ports is not sent may be carried or indicated via other signaling.

In another example, the transmitting end device may determine the M port groups from the N ports. The ports are the antenna ports.

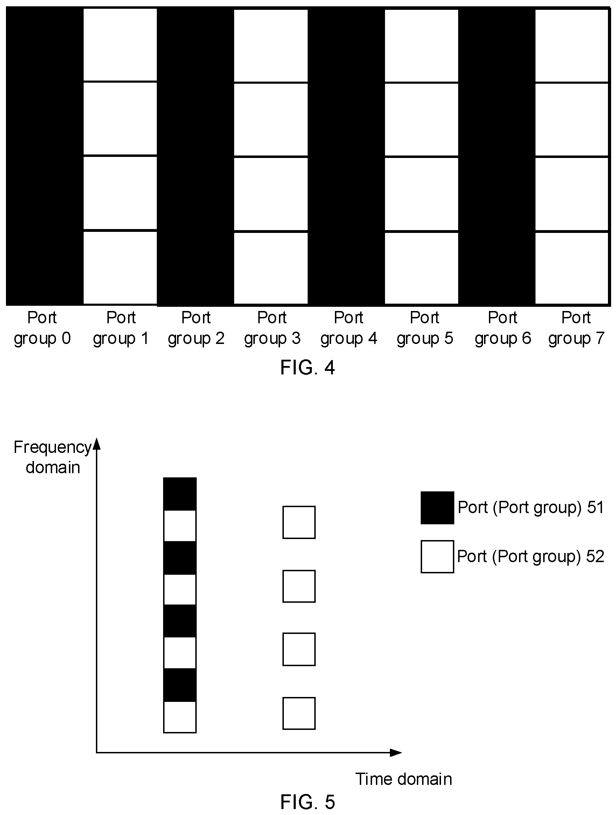

For example, a value of N may be 32, and a value of M may be 8. As shown in FIG. 4, the transmitting end device may divide all or some of the 32 ports into 8 groups, such as a port group 0, a port group 1, a port group 2, a port group 3, a port group 4, a port group 5, a port group 6, and a port group 7, where each port group includes 4 ports. The transmitting end device then generates description information for each of the 8 port groups, that is, generates the reference signal configuration information described above. The number of ports included in each group may be the same or different. Moreover, a port group differs from another port group by at least one port.

In some embodiments, the description information includes at least one of: resource information, sequence information, power information, transmission configuration indication information, waveform information, or processing mode indication information.

### (1) Resource Information

The resource information may include information describing resource locations occupied by reference signals transmitted on the M ports or M port groups. For example, considering the 5G communication system as an example, the resource location may be determined based on a slot position, an orthogonal frequency-division multiplexing (OFDM) symbol position, or a subcarrier position.

In some embodiments, different antenna ports may occupy different resources.

In a possible implementation, the M ports include at least a first port and a second port. Resources occupied by a reference signal transmitted on the first port are greater than or equal to resources occupied by a reference signal transmitted on the second port. In other words, resources used by reference signals transmitted on some ports are greater than or equal to resources used by reference signals transmitted on other ports. The reference signal provided in the present disclosure includes a plurality of types of reference signals, such as the channel state information reference signal, the demodulation reference signal, the phase tracking reference signal, or the sounding reference signal.

For example, a value of N is 32, and a value of M is 2. The transmitting end device may select two ports from the 32 ports. As shown in FIG. 5, one of the two ports, namely port 51, occupies all or part of subcarriers on one OFDM symbol to transmit the reference signal, and another port of the two ports, namely the first port 52, occupies all or part of subcarriers on two OFDM symbols to transmit the reference signal. Moreover, the resources occupied by the reference signal transmitted on the first port are greater than or equal to the resources occupied by the reference signal transmitted on the second port. The ports may occupy resources via time division, frequency division, or code division, and the resources occupied by different ports may vary according to radio channel conditions and system load conditions.

In some embodiments, the resources occupied by the reference signal transmitted on the first port being greater than or equal to the resources occupied by the reference signal transmitted on the second port, includes at least one of the following: the number of time-domain symbols occupied by the reference signal transmitted on the first port is greater than or equal to the number of time-domain symbols occupied by the reference signal transmitted on the second port; or the number of subcarriers occupied by the reference signal transmitted on the first port is greater than or equal to the number of subcarriers occupied by the reference signal transmitted on the second port.

In other words, the number of time-domain symbols occupied by some ports is greater than or equal to the number of time-domain symbols occupied by other ports, and the number of frequency-domain subcarriers occupied by some antenna ports is greater than or equal to the number of frequency-domain subcarriers occupied by other antenna ports.

In another possible implementation, the M port groups include at least a first port group and a second port group. Resources occupied by a reference signal transmitted on the first port group are greater than or equal to resources occupied by a reference signal transmitted on the second port group. In other words, resources used by reference signals transmitted on some port groups are greater than or equal to resources used by reference signals transmitted on other port groups. The reference signal provided in the present disclosure includes a plurality of types of reference signals, such as the channel state information reference signal, the demodulation reference signal, the phase tracking reference signal, or the sounding reference signal.

For example, a value of N is 32, and a value of M is 2. The transmitting end device may divide all or some of the 32 ports into two port groups. For example, the transmitting end device may divide all of the 32 ports into two port groups, and each port group includes 16 antenna ports. As shown in FIG. 5, one of the two port groups, namely port group 51, occupies all or part of subcarriers on one OFDM symbol to transmit the reference signal, and another port group of the two port groups, namely port group 52, occupies all or part of subcarriers on two OFDM symbols to transmit the reference signal. Moreover, the resources occupied by the reference signal transmitted on the first port group are greater than or equal to the resources occupied by the reference signal transmitted on the second port group. The port groups may occupy resources via time division, frequency division, or code division, and the resources occupied by different port groups may vary according to radio channel conditions and system load conditions.

In some embodiments, the resources occupied by the reference signal transmitted on the first port group being greater than or equal to the resources occupied by the reference signal transmitted on the second port group, includes at least one of the following: the number of time-domain symbols occupied by the reference signal transmitted on the first port group is greater than or equal to the number of time-domain symbols occupied by the reference signal transmitted on the second port group, or the number of subcarriers occupied by the reference signal transmitted on the first port group is greater than or equal to the number of subcarriers occupied by the reference signal transmitted on the second port group.

In other words, the number of time-domain symbols occupied by some port groups is greater than or equal to the number of time-domain symbols occupied by other port groups, and the number of frequency-domain subcarriers occupied by some antenna port groups is greater than or equal to the number of frequency-domain subcarriers occupied by other antenna port groups.

In some embodiments, a port or port group occupies a plurality of time-domain symbols, and a bandwidth occupied on the first time-domain symbol of the plurality of time-domain symbols is greater than or equal to a bandwidth occupied on the second time-domain symbol of the plurality of time-domain symbols.

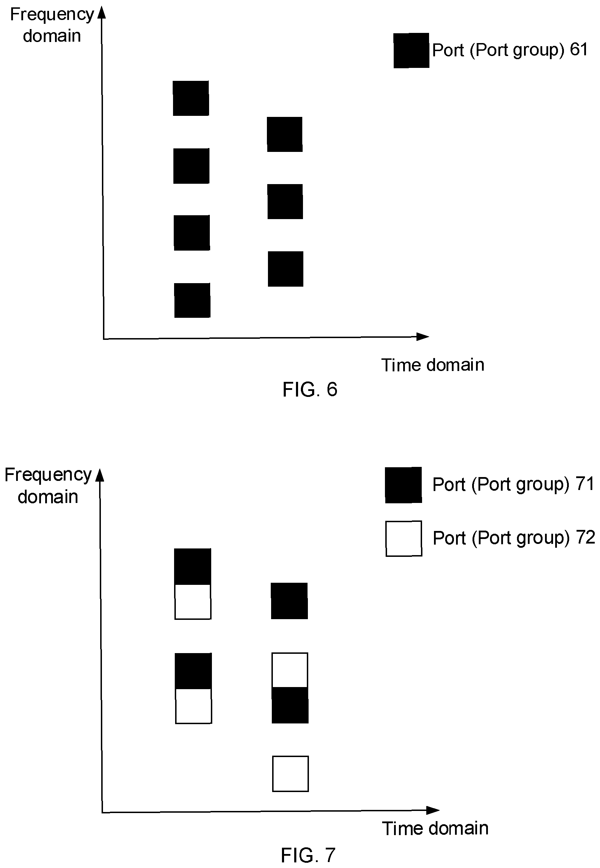

For example, as shown in FIG. 6, a same port or port group, namely port (or port group) 61, occupies two OFDM symbols, and a bandwidth occupied on the first OFDM symbol is greater than or equal to a bandwidth occupied on the second OFDM symbol. The number or positions of subcarriers occupied on each OFDM symbol may be different.

In some embodiments, the M ports include at least a first port and a second port, and a frequency hopping step size of the first port is greater than or equal to a frequency hopping step size of the second port. In other words, frequency hopping step sizes of some of the M ports are greater than or equal to frequency hopping step sizes of the other ports of the M ports.

In some embodiments, the M port groups include at least a first port group and a second port group, and a frequency hopping step size of the first port group is greater than or equal to a frequency hopping step size of the second port group. In other words, frequency hopping step sizes of some of the M port groups are greater than or equal to frequency hopping step sizes of the other port groups of the M port groups.

For example, as shown in FIG. 7, a port or port group 71 occupies all or part of subcarriers on two OFDM symbols, the subcarrier positions are determined by means of frequency hopping across different symbols, and a frequency hopping step size of the port or port group 71 is greater than or equal to a frequency hopping step size of a port or port group 72.

### (2) Sequence information

Sequence information of the reference signal transmitted on each port or port group may include a sequence generation mode, a sequence length, sequence content, etc. The reference signal provided in the present disclosure includes a plurality of types of reference signals, such as the channel state information reference signal, the demodulation reference signal, the phase tracking reference signal, or the sounding reference signal.

The sequence generation mode includes a maximum length linear feedback shift register sequence (also referred to as an m-sequence), Gold codes (also referred to as a Gold sequence), a CHU sequence (or a Chu sequence), a Zadoff-Chu sequence (also referred to as a ZC sequence), a chirp sequence (also referred to as a CHIRP sequence), a mode obtained through calculation and searching according to specific criteria, a mode in which an output is obtained by performing linear or non-linear processing on a specific input, a mode obtained by processing based on some useful data bits, or other possible modes.

In an example, a port or port group occupies 512 subcarriers on an OFDM symbol, and the reference signal transmitted on the port or port group corresponds to sequence information of a signal sequence with a sequence length of 512.

In another example, a port or port group occupies 512 subcarriers on an OFDM symbol, and the reference signal transmitted on the port or port group may correspond to sequence information of four signal sequences, where a sum of sequence lengths of the four signal sequences is 512. In the sequence information of the four reference signal sequences, the sequence lengths may be the same as each other or different from each other. For example, the sequence information of the four reference signal sequences may include sequence information of four sequences each having a length of 128.

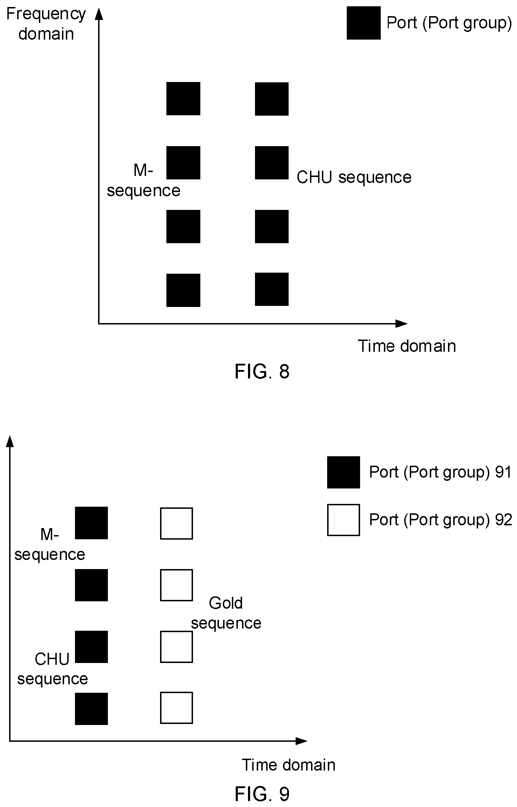

In yet another example, as shown in FIG. 8, a port or port group occupies all or part of subcarriers on two OFDM symbols, and sequence information on the OFDM symbols may be different. For example, the sequence generation modes are different; the m-sequence is used on the first OFDM symbol, and the CHU sequence is used on the second OFDM symbol.

In yet another example, a port or port group occupies all or part of subcarriers on two OFDM symbols, and sequence lengths on the OFDM symbols may be different from each other. For example, a sequence length on the first OFDM symbol is 512 and a sequence length on the second OFDM symbol is 256.

In some embodiments, the M ports include at least a first port and a second port, and a length of a sequence used by a reference signal transmitted on the first port is greater than or equal to a length of a sequence used by a reference signal transmitted on the second port. In other words, sequence lengths used by reference signals transmitted on some of the M ports are greater than or equal to sequence lengths used by reference signals transmitted on other ports of the M ports.

In some embodiments, the M port groups include at least a first port group and a second port group, and a length of a sequence used by a reference signal transmitted on the first port group is greater than or equal to a length of a sequence used by a reference signal transmitted on the second port group. In other words, sequence lengths of reference signals transmitted on some of the M port groups are greater than or equal to sequence lengths of reference signals transmitted on other port groups of the M port groups. The reference signal provided in the present disclosure includes a plurality of types of reference signals, such as the channel state information reference signal, the demodulation reference signal, the phase tracking reference signal, or the sounding reference signal.

For example, the reference signals transmitted on different port groups may use different sequences, and the sequence lengths corresponding to different port groups may be different. As shown in FIG. 9, a sequence of a reference signal transmitted on a port or port group 91 includes the m-sequence and the CHU sequence, and a sequence of the reference signal transmitted on a port or port group 92 includes the Gold sequence. Moreover, a length of the sequence used by the reference signal transmitted on the port or port group 91 is greater than or equal to a length of the sequence used by the reference signal transmitted on the port or port group 92.

### (3) Power information

The power information includes power information describing transmission of reference signals on the resources used by the M ports or M port groups. The reference signal provided in the present disclosure includes a plurality of types of reference signals, such as the channel state information reference signal, the demodulation reference signal, the phase tracking reference signal, or the sounding reference signal.

In a possible implementation, the M ports include at least a first port and a second port, and a power of a reference signal transmitted on the first port is greater than or equal to a power of a reference signal transmitted on the second port. In other words, powers used by reference signals transmitted on some of the M ports are greater than or equal to powers used by reference signals transmitted on the other ports of the M ports.

For example, the M ports include at least a port A and a port B, and a power of a reference signal transmitted on the port A is greater than or equal to a power of a reference signal transmitted on the port B. Alternatively, a power adjustment amount of the reference signal transmitted on the port A is greater than or equal to a power adjustment amount of the reference signal transmitted on the port B.

In some embodiments, a reference signal for measuring path loss among reference signals transmitted on the first port is different from a reference signal for measuring path loss among reference signals transmitted on the second port. For example, the M ports include at least a port A and a port B. A reference signal for measuring the path loss among reference signals transmitted on the port A is a reference signal R1, and a reference signal for measuring the path loss among reference signals transmitted on the port B is a reference signal R2.

In another possible implementation, the M port groups include at least a first port group and a second port group, and a power of a reference signal transmitted on the first port group is greater than or equal to a power of a reference signal transmitted on the second port group. In other words, powers used by reference signals transmitted on some of the M port groups are greater than or equal to powers used by reference signals transmitted on other port groups of the M port groups.

For example, the M port groups include at least a port group GA and a port group GB, and a power of a reference signal transmitted on the port group GA is greater than or equal to a power of a reference signal transmitted on the port group GB. Alternatively, a power adjustment amount of the reference signal transmitted on the port group GA is greater than or equal to a power adjustment amount of the reference signal transmitted on the port group GB.

In some embodiments, a reference signal for measuring path loss among reference signals transmitted on the first port group is different from a reference signal for measuring path loss among reference signals transmitted on the second port group. For example, the M port groups include at least a port group GA and a port group GB. A reference signal for measuring the path loss among reference signals transmitted on the port group GA is a reference signal R1, and a reference signal for measuring the path loss among reference signals transmitted on the port group GB is a reference signal R2.

In some embodiments, a port or port group occupies a plurality of time-domain symbols, and a transmission power or power adjustment amount on the first time-domain symbol of the plurality of time-domain symbols is greater than or equal to a transmission power or power adjustment amount on the second time-domain symbol of the plurality of time-domain symbols.

In an example, a port or port group occupies at least two OFDM symbols, and a transmission power or power adjustment amount on one of the two OFDM symbols is greater than or equal to a transmission power or power adjustment amount on the other of the two OFDM symbols.

In some embodiments, a port or port group occupies a plurality of subcarriers, and a transmission power or power adjustment amount on the first subcarrier of the plurality of subcarriers is greater than or equal to a transmission power or power adjustment amount on the second subcarrier of the plurality of subcarriers.

### (4) Transmission configuration indication information

The transmission configuration indication information may be used to indicate channel-related parameters corresponding to each port or port group, such as latency, frequency offset, Doppler shift, angle, moving speed, spatial filtering, or beam. Therefore, in response to the transmitting end device sending the transmission configuration indication information to the receiving end device, the receiving end device may determine, based on the transmission configuration indication information, the channel-related parameters such as latency, frequency offset, Doppler shift, angle, moving speed, spatial filtering, or beam.

In some embodiments, a port or port group corresponds to at least one piece of transmission configuration indication information, and each piece of transmission configuration indication information applies to a preset or specific resource region.

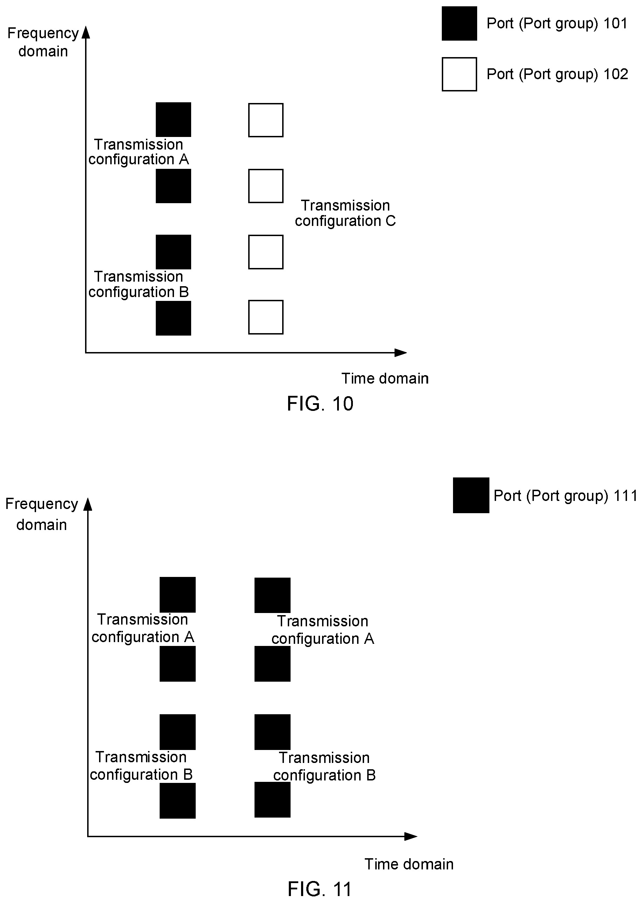

In an example, each of the M ports corresponds to one or more pieces of transmission configuration indication information. Alternatively, each of the M port groups corresponds to one or more pieces of transmission configuration indication information. As shown in FIG. 10, a port or port group 101 corresponds to indication information of transmission configuration A and transmission configuration B, and a port or port group 102 corresponds to indication information of transmission configuration C.

In another example, for any one of the M ports, such as a port A, the transmitting end device may divide the resources occupied by the port A into T portions, and each of the T portions or a combination of multiple portions of the T portions corresponds to one or more pieces of transmission configuration indication information. Alternatively, for any one of the M port groups, such as a port group GA, the transmitting end device may divide the resources occupied by the port group GA into T portions, and each of the T portions or a combination of multiple portions of the T portions corresponds to one or more pieces of transmission configuration indication information. Herein, T is a positive integer. As shown in FIG. 11, resources corresponding to a port or port group 111 are divided into two portions, and each portion corresponds to indication information of transmission configuration A and transmission configuration B.

In some embodiments, the reference signal configuration information is carried in at least one piece of control information.

For example, the reference signal configuration information may be carried via Y pieces of data control information (DCI). Herein, Y is an integer greater than or equal to 1, and a value of Y may be configured by default or determined by negotiation between the transmitting end and the receiving end. For example, the reference signal configuration information is sent via DCI carried over two physical downlink control channels (PDCCHs).

### (5) Waveform information

The waveform information of the reference signal transmitted on each port or port group may include information for indicating waveform generation modes such as OFDM, discrete Fourier transform spread orthogonal frequency division multiplexing (DFT-S-OFDM), orthogonal time frequency space (OTFS) modulation, code division multiple access (CDMA), and single carrier.

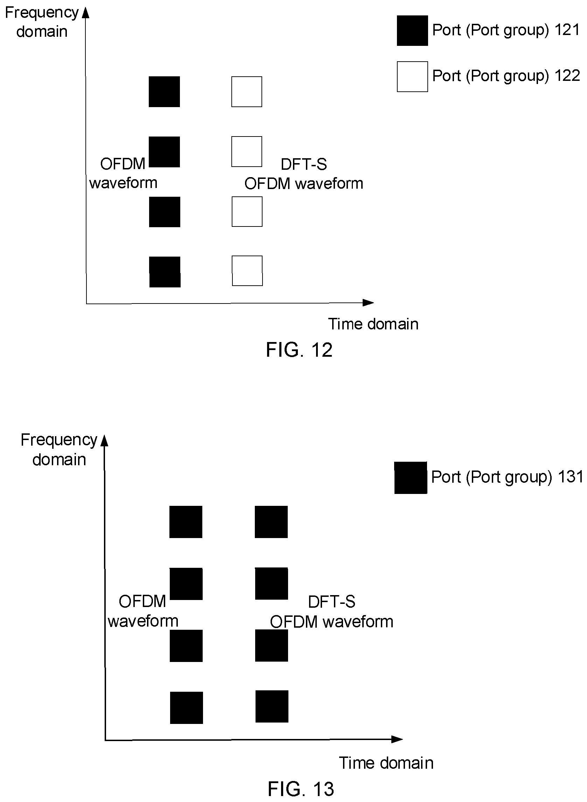

The reference signal provided in the present disclosure includes a plurality of types of reference signals, such as the channel state information reference signal, the demodulation reference signal, the phase tracking reference signal, or the sounding reference signal. In some embodiments, the same waveform or different waveforms may be used on the time-domain symbols occupied by different ports or port groups. As shown in FIG. 12, different waveforms are used on a port or port group 121 and a port or port group 122. An OFDM waveform is used on a time-domain symbol occupied by the port or port group 121, and a DFT-S-OFDM waveform is used on a time-domain symbol occupied by the port or port group 122.

In some embodiments, a same port or port group occupies D time-domain symbols, and different waveforms may be used on different time-domain symbols, where D is an integer greater than 1. As shown in FIG. 13, a port (or port group) 131 occupies two time-domain symbols. The OFDM waveform is used on one of the two time-domain symbols, and the DFT-S-OFDM waveform is used on the other of the two time-domain symbols.

### (6) Processing mode indication information

The processing mode indication information may include information for indicating a processing mode of a channel obtained by the receiving end device through performing measurement on the reference signal transmitted on each port or port group.

The processing mode may include a channel estimation mode and a channel prediction mode, such as Wiener filtering, least squares, minimum mean square error, an iterative method, a neural network, or deep learning. The neural network may include a convolutional network, a fully connected network, and a transformer network. In some embodiments, a processing mode indicated by the processing mode indication information includes a linear processing mode or a nonlinear processing mode.

The processing mode indication information may include a processing mode indication identifier. Each processing mode indication identifier applies to a preset or specific resource region. In some embodiments, the preset or specific resource region may be configured by default or determined by negotiation between the transmitting end and the receiving end.

In some embodiments, a value range of the processing mode indication information is configured by default, or determined by negotiation between the transmitting end and the receiving end.

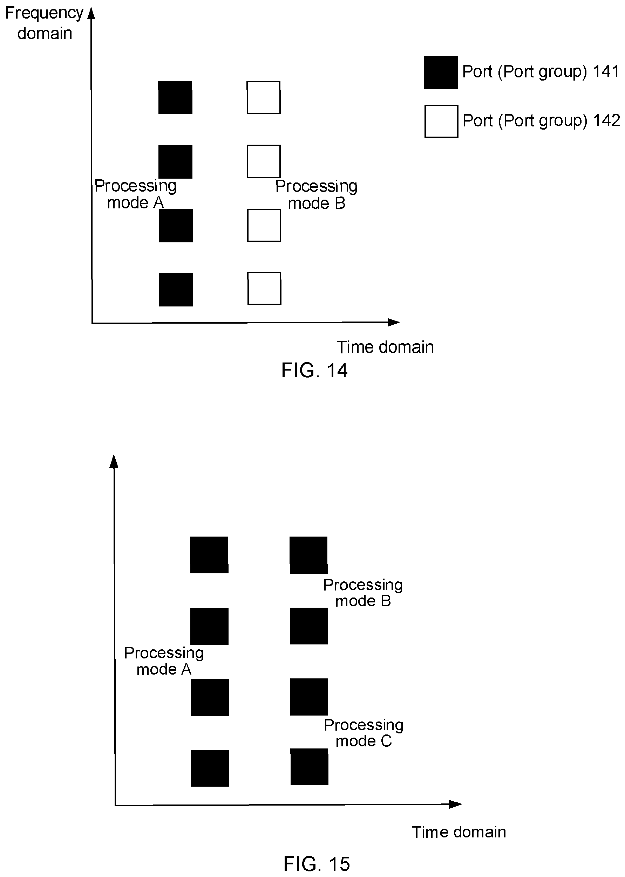

In some embodiments, the same processing mode or different processing modes may be used on time-domain symbols occupied by different ports or port groups. As shown in FIG. 14, a processing mode A and a processing mode B are used on time-domain symbols occupied by different ports or port groups, respectively. The processing mode A is used on a time-domain symbol occupied by the port or port group 141, and the processing mode B are used on a time-domain symbol occupied by the port or port group 142.

In some embodiments, a port or port group corresponds to at least one piece of processing mode indication information, and each piece of processing mode indication information applies to a preset or specific resource region. For example, different processing modes may be used on different resources in a port or port group. As shown in FIG. 15, in a resource set occupied by a same antenna port or antenna port group, a processing mode A may be used on some resources, and processing modes B and C may be used on other resources. In other words, different processing modes may be used on different resources.

In some embodiments, the M ports include at least a first port and a second port, and a time-domain scope of a reference signal transmitted on the first port is greater than or equal to a time-domain scope of a reference signal transmitted on the second port. In other words, time-domain scopes of reference signals transmitted on some of the M ports are greater than or equal to time-domain scopes of reference signals transmitted on other ports of the M ports. The reference signal provided in the present disclosure includes a plurality of types of reference signals, such as the channel state information reference signal, the demodulation reference signal, the phase tracking reference signal, or the sounding reference signal.

In some embodiments, the M port groups include at least a first port group and a second port group, and a time-domain scope of a reference signal transmitted on the first port group is greater than or equal to a time-domain scope of a reference signal transmitted on the second port group. In other words, time-domain scopes of reference signals transmitted on some of the M port groups are greater than or equal to time-domain scopes of reference signals transmitted on other port groups of the M port groups. The reference signal provided in the present disclosure includes a plurality of types of reference signals, such as the channel state information reference signal, the demodulation reference signal, the phase tracking reference signal, or the sounding reference signal.

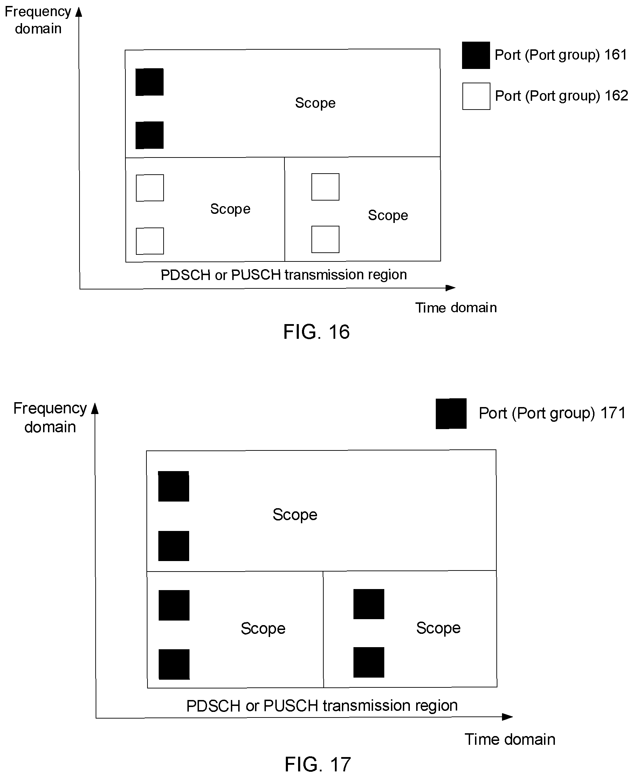

For example, as shown in FIG. 16, a time-domain scope of a reference signal transmitted on a port or port group 161 is greater than or equal to a time-domain scope of a reference signal transmitted on a port or port group 162.

In some embodiments, time-domain scopes of the reference signal transmitted on different time-domain symbols occupied by a same port or port group are different. For example, as shown in FIG. 17, a time-domain scope of a reference signal transmitted on the first time-domain symbol occupied by a port or port group 171 is greater than a time-domain scope of a reference signal transmitted on the second time-domain symbol occupied by the port or port group 171.

In some embodiments, the M ports include at least a first port and a second port, and a frequency-domain scope of a reference signal transmitted on the first port is greater than or equal to a frequency-domain scope of a reference signal transmitted on the second port. In other words, frequency-domain scopes of reference signals transmitted on some of the M ports are greater than or equal to frequency-domain scopes of reference signals transmitted on other ports of the M ports. The reference signal provided in the present disclosure includes a plurality of types of reference signals, such as the channel state information reference signal, the demodulation reference signal, the phase tracking reference signal, or the sounding reference signal.

In some embodiments, the M port groups include at least a first port group and a second port group, and a frequency-domain scope of a reference signal transmitted on the first port group is greater than or equal to a frequency-domain scope of a reference signal transmitted on the second port group. In other words, frequency-domain scopes of reference signals transmitted on some of the M port groups are greater than or equal to frequency-domain scopes of reference signals transmitted on other port groups of the M port groups. The reference signal provided in the present disclosure includes a plurality of types of reference signals, such as the channel state information reference signal, the demodulation reference signal, the phase tracking reference signal, or the sounding reference signal.

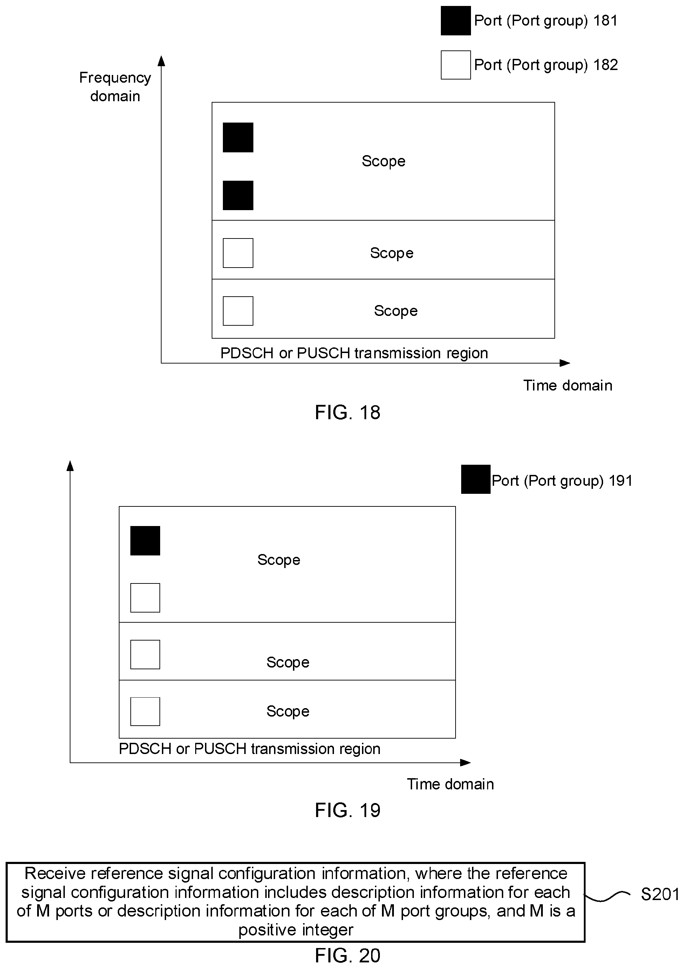

For example, as shown in FIG. 18, a frequency-domain scope of a reference signal transmitted on a port or port group 181 is greater than or equal to a frequency-domain scope of a reference signal transmitted on a port or port group 182.

In some embodiments, frequency-domain scopes of reference signals transmitted on different time-domain symbols occupied by a same port or port group are different. For example, as shown in FIG. 19, a frequency-domain scope of a reference signal transmitted on the first time-domain symbol occupied by a port or port group 191 is greater than a frequency-domain scope of a reference signal transmitted on the second time-domain symbol occupied by the port or port group 191.

In some embodiments, the M ports include at least a first port and a second port, and the number of bits of description information for the first port is greater than or equal to the number of bits of description information for the second port. In other words, the number of bits of description information for some of the M ports is greater than or equal to the number of bits of description information for the other ports of the M ports.

In some embodiments, the M port groups include at least a first port group and a second port group, and the number of bits of description information for the first port group is greater than or equal to the number of bits of description information for the second port group. In other words, the number of bits of description information for some of the M port groups is greater than or equal to the number of bits of description information for other port groups of the M port groups.

In some embodiments, resources occupied by some or all of the M ports overlap with resources occupied by data transmission. A reference signal transmitted on an overlapping resource portion and a reference signal transmitted on a non-overlapping resource portion are generated independently. For example, for the overlapping resource portion, the reference signal transmitted on the corresponding port is generated by means of CDMA, and for the non-overlapping resource portion, the reference signal transmitted on the corresponding port is generated by means of the CHU sequence or code division multiplexing (CDDM).

In some embodiments, resources occupied by some or all of the M port groups overlap with resources occupied by data transmission. A reference signal transmitted on an overlapping resource portion and a reference signal transmitted on a non-overlapping resource portion are generated independently. For example, for the overlapping resource portion, the reference signal transmitted on the corresponding port group is generated by means of CDMA, and for the non-overlapping resource portion, the reference signal transmitted on the corresponding port group is generated by means of the CHU sequence or CDDM.

Furthermore, the reference signal provided in the present disclosure includes a plurality of types of reference signals, such as the channel state information reference signal, the demodulation reference signal, the phase tracking reference signal, or the sounding reference signal.

In S102, the reference signal configuration information is sent.

The transmitting end device generates a reference signal and may send the reference signal configuration information to the receiving end device. Correspondingly, the receiving end device may receive the reference signal configuration information and the corresponding reference signal.

The reference signal provided in the present disclosure includes a plurality of types of reference signals, such as the channel state information reference signal, the demodulation reference signal, the phase tracking reference signal, or the sounding reference signal. Considering the demodulation reference signal as an example, the transmitting end device may send demodulation reference signal configuration information to the receiving end device. Then, the receiving end device may receive the demodulation reference signal configuration information and perform data demodulation based on the demodulation reference signal.

Based on the technical solutions provided in the present disclosure, the reference signal configuration information includes description information for each of the M ports or description information for each of M port groups. In this way, each port or each port group has its own reference information configuration, so that the corresponding reference signal may be adapted to an actual radio channel environment of each port or port group, thereby meeting transmission requirements of different service scenarios.

In some embodiments, another reference signal configuration method is further provided in the present disclosure. The method is applied to a receiving end device. As shown in FIG. 20, the method includes the following step.

In S201, reference signal configuration information is received. The reference signal configuration information includes description information for each of M ports or description information for each of M port groups, and M is a positive integer.

In some embodiments, the reference signal configuration information further includes information that the number of ports is N, and N is a positive integer greater than or equal to M.

Furthermore, the reference signal provided in the present disclosure includes a plurality of types of reference signals, such as the channel state information reference signal, the demodulation reference signal, the phase tracking reference signal, or the sounding reference signal.

In some embodiments, the description information includes at least one of: resource information, sequence information, power information, transmission configuration indication information, waveform information, or processing mode indication information.

The resource information may include information describing resource locations occupied by reference signals transmitted on the M ports or M port groups.

In some embodiments, the M ports include at least a first port and a second port, and resources occupied by a reference signal transmitted on the first port are greater than or equal to resources occupied by a reference signal transmitted on the second port.

In some embodiments, the resources occupied by the reference signal transmitted on the first port being greater than or equal to the resources occupied by the reference signal transmitted on the second port, includes at least one of the following:
the number of time-domain symbols occupied by the reference signal transmitted on the first port is greater than or equal to the number of time-domain symbols occupied by the reference signal transmitted on the second port; or
the number of subcarriers occupied by the reference signal transmitted on the first port is greater than or equal to the number of subcarriers occupied by the reference signal transmitted on the second port.

In some embodiments, the M port groups include at least a first port group and a second port group, and resources occupied by a reference signal transmitted on the first port group are greater than or equal to resources occupied by a reference signal transmitted on the second port group.

In some embodiments, the resources occupied by the reference signal transmitted on the first port group being greater than or equal to the resources occupied by the reference signal transmitted on the second port group, includes at least one of the following:
the number of time-domain symbols occupied by the reference signal transmitted on the first port group is greater than or equal to the number of time-domain symbols occupied by the reference signal transmitted on the second port group; or
the number of subcarriers occupied by the reference signal transmitted on the first port group is greater than or equal to the number of subcarriers occupied by the reference signal transmitted on the second port group.

In some embodiments, the M port groups include at least a first port group and a second port group, and frequency-domain resources occupied by a reference signal transmitted on the first port group are greater than or equal to frequency-domain resources occupied by a reference signal transmitted on the second port group.

In some embodiments, resources occupied by some or all of the M ports overlap with resources occupied by data transmission.

In some embodiments, resources occupied by some or all of the M port groups overlap with resources occupied by data transmission.

In some embodiments, a port or port group occupies a plurality of time-domain symbols, and a bandwidth occupied on the first time-domain symbol of the plurality of time-domain symbols is greater than or equal to a bandwidth occupied on the second time-domain symbol of the plurality of time-domain symbols.

In some embodiments, the M ports include at least a first port and a second port, and a frequency hopping step size of the first port is greater than or equal to a frequency hopping step size of the second port.

In some embodiments, the M port groups include at least a first port group and a second port group, and a frequency hopping step size of the first port group is greater than or equal to a frequency hopping step size of the second port group. The sequence information of the reference signal transmitted on each port or port group may include a sequence generation mode, a sequence length, sequence content, etc.

In some embodiments, the M ports include at least a first port and a second port, and a length of a sequence used by a reference signal transmitted on the first port is greater than or equal to a length of a sequence used by a reference signal transmitted on the second port.

In some embodiments, the M port groups include at least a first port group and a second port group, and a length of a sequence used by a reference signal transmitted on the first port group is greater than or equal to a length of a sequence used by a reference signal transmitted on the second port group.

The power information includes power information describing transmission of reference signals on the resources used by the M ports or M port groups.

In some embodiments, the M ports include at least a first port and a second port, and a power of a reference signal transmitted on the first port is greater than or equal to a power of a reference signal transmitted on the second port.

In some embodiments, the M port groups include at least a first port group and a second port group, and a power of a reference signal transmitted on the first port group is greater than or equal to a power of a reference signal transmitted on the second port group.

In some embodiments, a port or port group occupies a plurality of time-domain symbols, and a transmission power or power adjustment amount on the first time-domain symbol of the plurality of time-domain symbols is greater than or equal to a transmission power or power adjustment amount on the second time-domain symbol of the plurality of time-domain symbols.

In some embodiments, a port or port group occupies a plurality of subcarriers, and a transmission power or power adjustment amount on the first subcarrier of the plurality of subcarriers is greater than or equal to a transmission power or power adjustment amount on the second subcarrier of the plurality of subcarriers.

In some embodiments, the M ports include at least a first port and a second port, and a time-domain scope of a reference signal transmitted on the first port is greater than or equal to a time-domain scope of a reference signal transmitted on the second port.

In some embodiments, the M port groups include at least a first port group and a second port group, and a time-domain scope of a reference signal transmitted on the first port group is greater than or equal to a time-domain scope of a reference signal transmitted on the second port group.

In some embodiments, the M ports include at least a first port and a second port, and a frequency-domain scope of a reference signal transmitted on the first port is greater than or equal to a frequency-domain scope of a reference signal transmitted on the second port.

In some embodiments, the M port groups include at least a first port group and a second port group, and a frequency-domain scope of a reference signal transmitted on the first port group is greater than or equal to a frequency-domain scope of a reference signal transmitted on the second port group.

In some embodiments, the M ports include at least a first port and a second port, and the number of bits of description information for the first port is greater than or equal to the number of bits of description information for the second port.

In some embodiments, the M port groups include at least a first port group and a second port group, and the number of bits of description information for the first port group is greater than or equal to the number of bits of description information for the second port group.

The transmission configuration indication information may be used to indicate channel-related parameters corresponding to each port or port group.

In some embodiments, a port or port group corresponds to at least one piece of transmission configuration indication information, and each piece of transmission configuration indication information applies to a preset resource region.

The waveform information of the reference signal transmitted on each port or port group may include information for indicating waveform generation modes such as OFDM, DFT-S-OFDM, OTFS modulation, CDMA, and single carrier.

In some embodiments, a same waveform or different waveforms may be used on time-domain symbols occupied by different ports or port groups.

The processing mode indication information may include information for indicating a processing mode of a channel obtained by the receiving end device through performing measurement on the reference signal transmitted on each port or port group.

In some embodiments, a port or port group corresponds to at least one piece of processing mode indication information, and each piece of processing mode indication information applies to a preset resource region.

In some embodiments, a value range of the processing mode indication information is configured by default, or determined by negotiation between the transmitting end and the receiving end.

In some embodiments, a processing mode indicated by the processing mode indication information includes a linear processing mode or a nonlinear processing mode.

In some embodiments, the reference signal configuration information is carried in at least one piece of control information.

In some embodiments, the receiving end device may perform data demodulation based on the reference signal after receiving the reference signal configuration information.

Furthermore, for the detailed description of step S201, reference may be made to the relevant description in steps S101 and S102 described above, and details will not be repeated herein.

The solutions provided in the present disclosure are mainly described above from the perspective of interaction between various nodes. It may be understood that, in order to implement the functions described above, the various nodes, such as apparatuses or devices, include corresponding hardware structures and/or corresponding software modules for performing various functions. Those skilled in the art will easily realize that the present disclosure may be implemented in the form of hardware or a combination of hardware and computer software, with reference to the algorithm steps of the examples described in the embodiments disclosed herein. Whether a function is performed by hardware or computer software-driven hardware depends on the specific applications and design constraints of the technical solutions. Professional technicians may use different methods to implement the described functions for each particular application, but such implementation will not be considered beyond the scope of the present disclosure.

In the embodiments of the present disclosure, the communication device may be divided into functional modules according to the method embodiments described above. For example, each functional module may be divided corresponding to each function, or two or more functions may be integrated into one functional module. The integrated module described above may be implemented in the form of hardware or software. It will be noted that the division of modules in the embodiments of the present disclosure is schematic, and is merely a kind of logical function division, and there may be other division manners in actual implementation. The description is given below by considering an example in which each functional module is divided corresponding to each function.

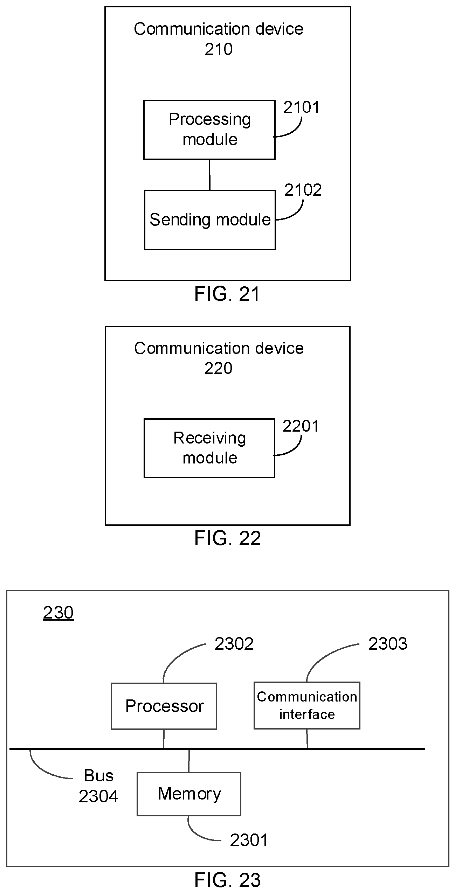

FIG. 21 is a schematic diagram showing components of a communication device provided in the embodiments of the present disclosure. As shown in FIG. 21, the communication device 210 includes a processing module 2101 and a sending module 2102.

In some embodiments, the processing module 2101 is configured to generate reference signal configuration information. The reference signal configuration information includes description information for each of M ports or description information for each of M port groups, and M is a positive integer. The sending module 2102 is configured to send the reference signal configuration information.

In some embodiments, the reference signal configuration information further includes information that the number of ports is N, and N is a positive integer greater than or equal to M.

In some embodiments, the description information includes at least one of: resource information, sequence information, power information, transmission configuration indication information, waveform information, or processing mode indication information.

In some embodiments, the M ports include at least a first port and a second port, and resources occupied by a reference signal transmitted on the first port are greater than or equal to resources occupied by a reference signal transmitted on the second port.

In some embodiments, the resources occupied by the reference signal transmitted on the first port being greater than or equal to the resources occupied by the reference signal transmitted on the second port, includes at least one of the following: the number of time-domain symbols occupied by the reference signal transmitted on the first port is greater than or equal to the number of time-domain symbols occupied by the reference signal transmitted on the second port; or the number of subcarriers occupied by the reference signal transmitted on the first port is greater than or equal to the number of subcarriers occupied by the reference signal transmitted on the second port.

In some embodiments, the M port groups include at least a first port group and a second port group, and frequency-domain resources occupied by a reference signal transmitted on the first port group are greater than or equal to frequency-domain resources occupied by a reference signal transmitted on the second port group.

In some embodiments, the resources occupied by the reference signal transmitted on the first port group being greater than or equal to the resources occupied by the reference signal transmitted on the second port group, includes at least one of the following: the number of time-domain symbols occupied by the reference signal transmitted on the first port group is greater than or equal to the number of time-domain symbols occupied by the reference signal transmitted on the second port group; or the number of subcarriers occupied by the reference signal transmitted on the first port group is greater than or equal to the number of subcarriers occupied by the reference signal transmitted on the second port group.

In some embodiments, a port or port group occupies a plurality of time-domain symbols, and a bandwidth occupied on the first time-domain symbol of the plurality of time-domain symbols is greater than or equal to a bandwidth occupied on the second time-domain symbol of the plurality of time-domain symbols.

In some embodiments, the M ports include at least a first port and a second port, and a frequency hopping step size of the first port is greater than or equal to a frequency hopping step size of the second port.

In some embodiments, the M port groups include at least a first port group and a second port group, and a frequency hopping step size of the first port group is greater than or equal to a frequency hopping step size of the second port group.

In some embodiments, the M ports include at least a first port and a second port, and a length of a sequence used by a reference signal transmitted on the first port is greater than or equal to a length of a sequence used by a reference signal transmitted on the second port.

In some embodiments, the M port groups include at least a first port group and a second port group, and a length of a sequence used by a reference signal transmitted on the first port group is greater than or equal to a length of a sequence used by a reference signal transmitted on the second port group.

In some embodiments, the M ports include at least a first port and a second port, and a power of a reference signal transmitted on the first port is greater than or equal to a power of a reference signal transmitted on the second port.

In some embodiments, the M port groups include at least a first port group and a second port group, and a power of a reference signal transmitted on the first port group is greater than or equal to a power of a reference signal transmitted on the second port group.

In some embodiments, a port or port group occupies a plurality of time-domain symbols, and a transmission power or power adjustment amount on the first time-domain symbol of the plurality of time-domain symbols is greater than or equal to a transmission power or power adjustment amount on the second time-domain symbol of the plurality of time-domain symbols.

In some embodiments, a port or port group occupies a plurality of subcarriers, and a transmission power or power adjustment amount on the first subcarrier of the plurality of subcarriers is greater than or equal to a transmission power or power adjustment amount on the second subcarrier of the plurality of subcarriers.

In some embodiments, the M ports include at least a first port and a second port, and a time-domain scope of a reference signal transmitted on the first port is greater than or equal to a time-domain scope of a reference signal transmitted on the second port.

In some embodiments, the M port groups include at least a first port group and a second port group, and a time-domain scope of a reference signal transmitted on the first port group is greater than or equal to a time-domain scope of a reference signal transmitted on the second port group.

In some embodiments, the M ports include at least a first port and a second port, and a frequency-domain scope of a reference signal transmitted on the first port is greater than or equal to a frequency-domain scope of a reference signal transmitted on the second port.

In some embodiments, the M port groups include at least a first port group and a second port group, and a frequency-domain scope of a reference signal transmitted on the first port group is greater than or equal to a frequency-domain scope of a reference signal transmitted on the second port group.

In some embodiments, the M ports include at least a first port and a second port, and the number of bits of description information for the first port is greater than or equal to the number of bits of description information for the second port.

In some embodiments, the M port groups include at least a first port group and a second port group, and the number of bits of description information for the first port group is greater than or equal to the number of bits of description information for the second port group.

In some embodiments, resources occupied by some or all of the M ports overlap with resources occupied by data transmission.

In some embodiments, resources occupied by some or all of the M port groups overlap with resources occupied by data transmission.

In some embodiments, a port or port group corresponds to at least one piece of transmission configuration indication information, and each piece of transmission configuration indication information applies to a preset resource region.

In some embodiments, a port or port group corresponds to at least one piece of processing mode indication information, and each piece of processing mode indication information applies to a preset resource region.

In some embodiments, a value range of the processing mode indication information is configured by default, or determined by negotiation between a transmitting end and a receiving end.

In some embodiments, a processing mode indicated by the processing mode indication information includes a linear processing mode or a nonlinear processing mode.

In some embodiments, the reference signal configuration information is carried in at least one piece of control information.

For the more detailed description of the processing module 2101 and the sending module 2102, as well as the more detailed description of their various technical features and beneficial effects, reference may be made to the part of the corresponding method embodiments described above, and details will not be repeated herein.

FIG. 22 is a schematic diagram showing components of a communication device provided in the embodiments of the present disclosure. As shown in FIG. 22, the communication device 220 includes a receiving module 2201.

In some embodiments, the receiving module 2201 is configured to receive reference signal configuration information. The reference signal configuration information includes description information for each of M ports or description information for each of M port groups, and M is a positive integer.

In some embodiments, the reference signal configuration information further includes information that the number of ports is N, and N is a positive integer greater than or equal to M.

In some embodiments, the description information includes at least one of: resource information, sequence information, power information, transmission configuration indication information, waveform information, or processing mode indication information.

In some embodiments, the M ports include at least a first port and a second port, and resources occupied by a reference signal transmitted on the first port are greater than or equal to resources occupied by a reference signal transmitted on the second port.

In some embodiments, the M port groups include at least a first port group and a second port group, and frequency-domain resources occupied by a reference signal transmitted on the first port group are greater than or equal to frequency-domain resources occupied by a reference signal transmitted on the second port group.

In some embodiments, a port or port group occupies a plurality of time-domain symbols, and a bandwidth occupied on the first time-domain symbol of the plurality of time-domain symbols is greater than or equal to a bandwidth occupied on the second time-domain symbol of the plurality of time-domain symbols.

In some embodiments, the M ports include at least a first port and a second port, and a power of a reference signal transmitted on the first port is greater than or equal to a power of a reference signal transmitted on the second port.

In some embodiments, the M ports include at least a first port and a second port, and a time-domain scope of a reference signal transmitted on the first port is greater than or equal to a time-domain scope of a reference signal transmitted on the second port.

In some embodiments, resources occupied by some or all of the M ports overlap with resources occupied by data transmission.

For the more detailed description of the receiving module 2201, as well as the more detailed description of its various technical features and beneficial effects, reference may be made to the part of the corresponding method embodiments described above, and details will not be repeated herein.

It will be noted that the modules in FIG. 21 or 22 may also be referred to as units. For example, the processing module may be referred to as a processing unit. In addition, in the embodiments shown in FIG. 21 or 22, names of the various modules may also be different from those shown in the figure. For example, the receiving module may also be referred to as a communication module.

If the units in FIG. 21 or 22 are implemented in the form of software functional modules and sold or used as an independent product, the units may be stored in a computer-readable storage medium. Based on such understanding, the technical solutions in the embodiments of the present disclosure may be essentially, or a part of the technical solutions in the embodiments of the present disclosure that contributes to the conventional technologies may be, or all or part of the technical solutions may be, embodied in the form of a software product. The computer software product is stored in a storage medium and includes a plurality of instructions, to enable a computer device (which may be a personal computer, a server, or a network device) or processor to perform all or some of the steps of the method in the various embodiments of the present disclosure. The storage medium for storing the computer software product includes various media capable of storing program codes, such as a USB flash disk, a mobile hard disk, a read-only memory (ROM), a random access memory (RAM), a magnetic disk, or an optical disk.

In a case where the functions of the integrated modules described above are implemented in the form of hardware, a schematic diagram showing a structure of a communication device is provided in the embodiments of the present disclosure. As shown in FIG. 23, the communication device 230 includes a processor 2302, a communication interface 2303, and a bus 2304. Optionally, the communication device 230 may further include a memory 2301.

The processor 2302 may implement or execute various exemplary logical blocks, modules, and circuits described with reference to the content in the present disclosure. The processor 2302 may be a central processing unit, a general-purpose processor, a digital signal processor, an application specific integrated circuit, a field programmable gate array, or other programmable logic component, a transistor logic component, a hardware component, or any combination thereof. The processor 2302 may implement or execute various exemplary logical blocks, modules, and circuits described with reference to the content in the present disclosure. The processor 2302 may also be a combination for implementing computing functions, such as a combination of one or more microprocessors, or a combination of a digital signal processor (DSP) and a microprocessor.

The communication interface 2303 is configured to connect with other devices via a communication network. The communication network may be an Ethernet, a radio access network, a wireless local area network (WLAN), or the like.

The memory 2301 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or other magnetic storage device, or any other medium capable of being used to carry or store desired program codes and capable of being accessed by a computer, where the desired program codes have instructions or are in the form of data structure.

As a possible implementation, the memory 2301 may exist independently of the processor 2302, and the memory 2301 may be connected to the processor 2302 via the bus 2304 and configured to store instructions or program codes. When invoking and executing the instructions or program codes stored in the memory 2301, the processor 2302 may perform the method provided in the embodiments of the present disclosure.

In another possible implementation, the memory 2301 may also be integrated with the processor 2302.

The bus 2304 may be an extended industry standard architecture (EISA) bus or the like. The bus 2304 may be classified as an address bus, a data bus, a control bus, and the like. For convenience of representation, only one bold line is used in FIG. 23, but this does not mean that there is only one bus or only one type of bus.

From description of the implementations described above, those skilled in the art will clearly understand that, for convenience and brevity of description, the division of functional modules described above is given by way of example. In practical applications, the functions may be allocated to different functional models to complete as required. That is to say, an internal structure of an apparatus or a device is divided into different functional models, to perform all or part of the functions described above.

A computer-readable storage medium is further provided in the embodiments of the present disclosure. All or part of the processes in the method embodiments described above may be implemented by relevant hardware instructed by computer instructions. The program may be stored in the computer-readable storage medium described above. The program, upon being executed, may include the processes in the various method embodiments described above. The computer-readable storage medium may be a storage unit or a memory in any one of the embodiments described above. The computer-readable storage medium may also be an external storage device of the apparatus or device described above, such as a plug-in hard disk, a smart media card (SMC), a secure digital (SD) card, or a flash card, equipped on the apparatus or device. Furthermore, the computer-readable storage medium may further include both an internal storage unit and external storage device of the apparatus or device described above. The computer-readable storage medium is used to store the computer program described above and other programs and data required by the apparatus or device described above. The computer-readable storage medium may further be used to temporarily store data that has been output or is to be output.

A computer program product including a computer program is further provided in the embodiments of the present disclosure. The computer program product, upon being run on a computer, enables the computer to perform any one of the methods provided in the embodiments described above.

Although the present disclosure is described herein in conjunction with various embodiments, other variations of the disclosed embodiments may be understood and implemented by those skilled in the art by viewing the accompanying drawings, the disclosed contents, and the appended claims during the implementation of the present disclosure claimed to be protected. In the claims, the word "comprise/comprises/comprising/include/includes/including" does not exclude other components or steps, and "a/an" or "one" does not exclude multiple cases. A single processor or other units may implement several functions listed in the claims. Some measures are recited in different dependent claims, but this does not mean that these measures cannot be combined to achieve a favorable effect.

Although the present disclosure is described in conjunction with specific features and embodiments thereof, it is apparent that various modifications and combinations may be made thereto without departing from the spirit and scope of the present disclosure. Accordingly, the specification and accompanying drawings herein are merely exemplary illustration of the present disclosure defined by the appended claims, and are deemed to cover any and all modifications, variations, combinations or equivalents falling within the scope of the present disclosure. Obviously, those skilled in the art may make various modifications and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above are merely specific implementations of the present disclosure, but the protection scope of the present disclosure is not limited thereto. Any variations or replacements within the technical scope disclosed in the present disclosure will fall within the protection scope of the present disclosure. Therefore, the protection scope of the present disclosure will be subject to the protection scope of the claims.

## Claims

1. A reference signal configuration method, comprising:
generating reference signal configuration information, the reference signal configuration information including description information for each of M ports or description information for each of M port groups, and M being a positive integer; and
sending the reference signal configuration information.

2. The method according to claim 1, wherein the reference signal configuration information further includes information that a number of ports is N, and N is a positive integer greater than or equal to M.

3. The method according to claim 1, wherein the description information includes at least one of: resource information, sequence information, power information, transmission configuration indication information, waveform information, or processing mode indication information.

4. The method according to claim 1, wherein the M ports include at least a first port and a second port, and resources occupied by a reference signal transmitted on the first port are greater than or equal to resources occupied by a reference signal transmitted on the second port.

5. The method according to claim 4, wherein the resources occupied by the reference signal transmitted on the first port being greater than or equal to the resources occupied by the reference signal transmitted on the second port, includes at least one of:
a number of time-domain symbols occupied by the reference signal transmitted on the first port being greater than or equal to a number of time-domain symbols occupied by the reference signal transmitted on the second port; or
a number of subcarriers occupied by the reference signal transmitted on the first port being greater than or equal to a number of subcarriers occupied by the reference signal transmitted on the second port.

6. The method according to claim 1, wherein the M port groups include at least a first port group and a second port group, and resources occupied by a reference signal transmitted on the first port group are greater than or equal to resources occupied by a reference signal transmitted on the second port group.

7. The method according to claim 6, wherein the resources occupied by the reference signal transmitted on the first port group being greater than or equal to the resources occupied by the reference signal transmitted on the second port group, includes at least one of:
a number of time-domain symbols occupied by the reference signal transmitted on the first port group being greater than or equal to a number of time-domain symbols occupied by the reference signal transmitted on the second port group; or
a number of subcarriers occupied by the reference signal transmitted on the first port group being greater than or equal to a number of subcarriers occupied by the reference signal transmitted on the second port group.

8. The method according to claim 1, wherein a port or port group occupies a plurality of time-domain symbols, and a bandwidth occupied on a first time-domain symbol of the plurality of time-domain symbols is greater than or equal to a bandwidth occupied on a second time-domain symbol of the plurality of time-domain symbols.

9. The method according to claim 1, wherein the M ports include at least a first port and a second port, and a frequency hopping step size of the first port is greater than or equal to a frequency hopping step size of the second port.

10. The method according to claim 1, wherein the M port groups include at least a first port group and a second port group, and a frequency hopping step size of the first port group is greater than or equal to a frequency hopping step size of the second port group.

11. The method according to claim 1, wherein the M ports include at least a first port and a second port, and a length of a sequence used by a reference signal transmitted on the first port is greater than or equal to a length of a sequence used by a reference signal transmitted on the second port.

12. The method according to claim 1, wherein the M port groups include at least a first port group and a second port group, and a length of a sequence used by a reference signal transmitted on the first port group is greater than or equal to a length of a sequence used by a reference signal transmitted on the second port group.

13. The method according to claim 1, wherein the M ports include at least a first port and a second port, and a power of a reference signal transmitted on the first port is greater than or equal to a power of a reference signal transmitted on the second port.

14. The method according to claim 1, wherein the M port groups include at least a first port group and a second port group, and a power of a reference signal transmitted on the first port group is greater than or equal to a power of a reference signal transmitted on the second port group.

15. The method according to claim 1, wherein a port or port group occupies a plurality of time-domain symbols, and a transmission power or power adjustment amount on a first time-domain symbol of the plurality of time-domain symbols is greater than or equal to a transmission power or power adjustment amount on a second time-domain symbol of the plurality of time-domain symbols.

16. The method according to claim 1, wherein a port or port group occupies a plurality of subcarriers, and a transmission power or power adjustment amount on a first subcarrier of the plurality of subcarriers is greater than or equal to a transmission power or power adjustment amount on a second subcarrier of the plurality of subcarriers.

17. The method according to claim 1, wherein the M ports include at least a first port and a second port, and a time-domain scope of a reference signal transmitted on the first port is greater than or equal to a time-domain scope of a reference signal transmitted on the second port.

18. The method according to claim 1, wherein the M port groups include at least a first port group and a second port group, and a time-domain scope of a reference signal transmitted on the first port group is greater than or equal to a time-domain scope of a reference signal transmitted on the second port group.

19. The method according to claim 1, wherein the M ports include at least a first port and a second port, and a frequency-domain scope of a reference signal transmitted on the first port is greater than or equal to a frequency-domain scope of a reference signal transmitted on the second port.

20. The method according to claim 1, wherein the M port groups include at least a first port group and a second port group, and a frequency-domain scope of a reference signal transmitted on the first port group is greater than or equal to a frequency-domain scope of a reference signal transmitted on the second port group.

21. The method according to claim 1, wherein the M ports include at least a first port and a second port, and a number of bits of description information for the first port is greater than or equal to a number of bits of description information for the second port.

22. The method according to claim 1, wherein the M port groups include at least a first port group and a second port group, and a number of bits of description information for the first port group is greater than or equal to a number of bits of description information for the second port group.

23. The method according to claim 1, wherein resources occupied by some or all of the M ports overlap with resources occupied by data transmission.

24. The method according to claim 1, wherein resources occupied by some or all of the M port groups overlap with resources occupied by data transmission.

25. The method according to claim 3, wherein a port or port group corresponds to at least one piece of transmission configuration indication information, and each piece of transmission configuration indication information applies to a preset resource region.

26. The method according to claim 3, wherein a port or port group corresponds to at least one piece of processing mode indication information, and each piece of processing mode indication information applies to a preset resource region.

27. The method according to claim 3, wherein a value range of the processing mode indication information is configured by default, or determined by negotiation between a transmitting end and a receiving end.

28. The method according to claim 3, wherein a processing mode indicated by the processing mode indication information includes a linear processing mode or a nonlinear processing mode.

29. The method according to claim 1, wherein the reference signal configuration information is carried in at least one piece of control information.

30. A reference signal configuration method, comprising:
receiving reference signal configuration information, wherein the reference signal configuration information includes description information for each of M ports or description information for each of M port groups, and M is a positive integer.

31. The method according to claim 30, wherein the reference signal configuration information further includes information that a number of ports is N, and N is a positive integer greater than or equal to M.

32. The method according to claim 30, wherein the description information includes at least one of: resource information, sequence information, power information, transmission configuration indication information, waveform information, or processing mode indication information.

33. The method according to claim 30, wherein the M ports include at least a first port and a second port, and resources occupied by a reference signal transmitted on the first port are greater than or equal to resources occupied by a reference signal transmitted on the second port.

34. The method according to claim 30, wherein the M port groups include at least a first port group and a second port group, and resources occupied by a reference signal transmitted on the first port group are greater than or equal to resources occupied by a reference signal transmitted on the second port group.

35. The method according to claim 30, wherein a port or port group occupies a plurality of time-domain symbols, and a bandwidth occupied on a first time-domain symbol of the plurality of time-domain symbols is greater than or equal to a bandwidth occupied on a second time-domain symbol of the plurality of time-domain symbols.

36. The method according to claim 30, wherein the M ports include at least a first port and a second port, and a power of a reference signal transmitted on the first port is greater than or equal to a power of a reference signal transmitted on the second port.

37. The method according to claim 30, wherein the M ports include at least a first port and a second port, and a time-domain scope of a reference signal transmitted on the first port is greater than or equal to a time-domain scope of a reference signal transmitted on the second port.

38. The method according to claim 30, wherein resources occupied by some or all of the M ports overlap with resources occupied by data transmission.

39. A communication device, comprising a memory and a processor, wherein the memory is coupled to the processor; the memory is configured to store instructions executable by the processor; the processor, upon executing the instructions, performs the method according to any one of claims 1 to 38.

40. A computer-readable storage medium, having stored computer instructions that, when run on a communication device, enable the communication device to perform the method according to any one of claims 1 to 38.
